# EUROPÄISCHE PATENTANMELDUNG

(11) **EP 1 400 305 A1**
(43) Veröffentlichungstag der Anmeldung: **24.03.2004**
(21) Anmeldenummer: 02450209.8
(22) Anmeldetag: 19.09.2002
(51) Int. Cl.: B23Q 1/54, B23Q 1/03

(54) **Unterlagesystem**

(71) Anmelder: Kochberger, Renate, 3262 Wang (AT)
(72) Erfinder: Kochberger, Andreas, 3262 Wang (AT)

(57) **Zusammenfassung**

Vorrichtung zum Positionieren von Werkstücken, insbesondere als Auflage in einem Preßtisch, mit einer Führungsplatte und einer Vielzahl bewegbar angeordneter Einzelträger zur Aufnahme der Werkstücke, wobei jeder Einzelträger (11) gegeneinander bewegbare Teile, insbesondere einen in der Führungsplatte (9) angeordneten Fußteil (10) und einen mit diesem verbundenen Kopfteil (16) umfaßt. Der Fußteil (10) ist in der Führungsplatte (9)drehbar und der Kopfteil (16) am Fußteil (10) dezentral drehbar angeordnet.

## Beschreibung

Die Erfindung betrifft eine Vorrichtung zum Positionieren von Werkstücken, insbesondere als Auflage in einem Preßtisch, mit einer Führungsplatte und einer Vielzahl bewegbar angeordneter Einzelträger zur Aufnahme der Werkstücke.

Um flächige Werkstücke in einem Preßtisch zu positionieren, müssen passende Unterlagen geschaffen werden, um diese in ihrer Position zu halten und bearbeiten zu können.

Insbesondere beim Folieren von Werkstücken, bei welchem diese gleichzeitig an ihrer Oberseite und allen Rändern mit Folie überzogen werden, ist es notwendig, Unterlagen zur Verfügung zu stellen, welche im Bereich der Ränder zurückgesetzt ist, um die von oben zugeführte Folie mittels Vakuum und Überdruck auch unter die Ränder zu ziehen.

Es ist bekannt, Steckplatten zu verwenden, bei welchen Auflagestöpsel in entsprechende Aufnahmeöffnungen gemäß einem vorher zu ermittelnden Belegungsbild eingesteckt werden. Dieses System ist einerseits nur für beschränkte Werkstückgrößen einsetzbar und anderseits - da für jede neue Kombination an Werkstücken ein neues Belegungsbild geschaffen werden muß - auch sehr zeitaufwendig.

Weiters ist aus der DE 196 11 754 ein System bekannt, welches in der Länge reversible, bewegliche Träger verwendet. Auch dieses System bietet wenig Maßfreiheit und ist verhältnismäßig kompliziert.

Es sind auch Legetische bekannt, bei weichen Träger automatisch aus der Tischplatte zur Unterstützung der Werkstücke hochgefahren werden können. Dazu wird das jeweilige Belegungsbild vorerst optisch abgetastet und anschließend Reihe um Reihe die Trägerkombination erstellt. Auch dieses Verfahren ist ziemlich zeitaufwendig und obendrein auch noch sehr kostspielig und neigt zufolge seiner Übertechnisierung auch zu Ausfällen. Derartige Systeme sind immer mit der Presse verbunden und können nicht nachgerüstet werden.

Es ist schließlich aus der EP 99 89 0168 ein Preßtisch bekannt, bei welchem Einzeiträger innerhalb eines gewissen Bewegungsbereiches horizontal bewegbar sind. Dadurch können Werkstücke beliebiger Größenordnung beschichtet werden. Die Träger werden von Hand einfach unter den Werkstückrand geschoben.

Der Träger selbst umfaßt einen Fußteil, der in einer Schablone geführt ist und auf welchem ein Kopfteil über einen exzentrisch angeordneten Schaft sitzt. Bei hohen Kräften kann es zum Knicken kommen und die Träger erleiden eine Verformung.

Trotz der Vorteilhaftigkeit dieses Systems kann es beim Auflegen der Werkstücke und dem anschließenden Justieren der Kopfteile - insbesondere im Randbereich des Preßtisches - dazu kommen, daß Kopfteile sich nicht mehr geeignet verschieben lassen und störend stehen bleiben. In solchen Fällen müssen die Kopfteile entweder weiter hinter das Werkstück geschoben oder dieses anders auf die Träger aufgesetzt werden.

Aufgabe der Erfindung ist es, einen einfach zu bedienenden und für jede beliebige Kombination an Werkstücken geeignetes Preßbett zu schaffen. Es soll eine Lösung zur Verfügung gestellt werden, mit deren Hilfe jedes beliebige Belegungsbild und vollständige Maßfreiheit zur Aufnahme beliebiger Maßteile erreicht werden kann.

Die Erfindung löst die Aufgabe dadurch, daß jeder Einzelträger gegeneinander bewegbare Teile, insbesondere einen in der Führungsplatte angeordneten Fußteil und einen mit diesem verbundenen Kopfteil umfaßt, daß der Fußteil in der Führungsplatte drehbar angeordnet ist und daß der Kopfteil dezentral drehbar am Fußteil angeordnet ist.

Der Fußteil ist dabei in einer ihm äquivalenten Ausnehmung der Führungsplatte drehbar angeordnet.

Diese Ausbildung verwendet somit eine Kombination zweier Drehbewegungen und ermöglicht jede beliebige Position des Kopfteiles in seinem Bewegungsbereich. Durch entsprechende Anordnung der Einzelträger in der Führungsplatte kann jeder beliebige Punkt innerhalb des Preßbettes erreicht werden, ohne daß die Kopfteile einander behindern würden. Mittels der genannten Anordnung ist es möglich, zwei nebeneinander liegende Kopfteile auch parallel zu verschieben, was eine besonders feine und genaue Justierung des Belegungsbildes ermöglicht.

Erfindungsgemäß ist vorgesehen, daß der Fußteil kreisförmig und scheibenförmig ausgebildet ist. Der scheibenförmige Fußteil ist in einer äquivalenten Ausnehmung in der Führungsplatte drehbar. Zwischen dem Außenmaß des Fußteiles und dem Innenmaß der Ausnehmung ist ein Spaltmaß vorgesehen, um eine reibungslose Bewegung zu ermöglichen.

Um das Ziel, vollständige Maßfreiheit zur Aufnahme aller Maßteile zu erreichen, ist nach einem weiteren Merkmal der Erfindung vorgesehen, daß die Verbindung zwischen Kopfteil und Fußteil für jeden der beiden Teile dezentral erfolgt.

Die Kombination der so erzeugten Lösungskurven deckt jeden beliebigen Punkt innerhalb des Bewegungsbereiches außerhalb der Fußkreises ab.

Ein weiteres Merkmal der Erfindung ist es, daß der Kopfteil an dessen Unterseite einen Magneten umfaßt, der mit dieser bündig abschließt. Der Magnet ist ein Permanentmagnet, der in den Kopfteil eingeklebt oder mittels Preßsitz in diesem angeordnet ist.

Die Verwendung des Magnetes erfolgt, um nicht gewünschte Bewegung en des Kopfteiles beispielsweise beim Aus- und Einfahren des Preßtisches zu vermeiden. Weiters kann bei Serienproduktion durch "Festhalten" des Kopfteiles an der Führungsplatte sozusagen ein "Belegungsbild - Speicher" geschaffen werden.

Erfindungsgemäß ist auch vorgesehen, daß der Fußteil mit der Führungsplatte über eine Drehbefestigung verbunden ist und daß die Drehbefestigung im Fußteil zentral angeordnet ist.

Ein Kippen oder Verkanten des Fußteiles in der Ausnehmung ist damit vermieden. Weiters wird damit ein Herausziehen des Einzelträgers beim Ablösen der fertig gepreßten Folie vermieden.

Nach einer Weiterbildung der Erfindung ist auch vorgesehen, daß die Führungsplatte auf einer Zwischenplatte aufruht, weiche die Drehbefestigung jedes Fußteiles aufnimmt und daß die Zwischenplatte mit einer Grundplatte verbunden ist.

Die Verbindung zwischen Grundplatte und Zwischenplatte läßt eine horizontale Bewegung der beiden Platten zueinander zu.

Da nach einem weiteren Merkmal der Erfindung die Grundplatte aus Aluminium und die Zwischenplatte aus verzinktem Stahlblech besteht, die beiden Platten also unterschiedliche Wärmeausdehnungskoeffizienten aufweisen, muß bei Einsatz des Preßbettes mit einer Bewegung der beiden Platten zueinander gerechnet werden.

Gemäß einer Ausbildung der Erfindung besteht die Verbindung zwischen Grundplatte und Zwischenplatte in einer Schraube-Hülse Kombination, wobei an der Unterseite der Grundplatte eine Ausnehmung zur Aufnahme des Hülsenkopfes vorgesehen ist und zwischen dem Außenmaß des Hülsenkopfes und dem Innenmaß der Ausnehmung ein Bewegungsbereich vorgesehen ist, in weichen sich der Hülsenkopf hinein bewegen kann. Die Differenz der Ausdehnungsmaße ist durch diesen Bereich subsumiert.

In einer Weiterbildung ist auch vorgesehen, daß durch die Führungsplatte, die Zwischenplatte und die Grundplatte durchgehende Öffnungen zum Durchtritt von Vakuum ausgebildet sind und daß die Öffnungen in einem Abstand zwischen 5 - 10 cm vorgesehen sind.

Gemäß einer vorteilhaften Ausbildung ist die Grundplatte an ihrer Unterseite mit einer Riffelung versehen, wobei diese zur Leitung des Vakuums bzw. des Vorheizdruckes aus der Presse durch die Öffnungen dient.

Erfindungsgemäß ist vorgesehen, daß der Kopfteil aus Kunststoff gefertigt ist und daß er an seiner Oberseite eine elastische Auflage umfaßt.

Durch die elastische Auflage ist ein Schutz der Werkstücke gegen Verkratzen und Eindrücken des Kopfteiles in die Werkstückoberfläche gegeben. Weiters wird auch noch ein Verrutschen der Preßteile beim Einfahren des Preßtisches vermieden.

Ein abschließendes Merkmal der Erfindung ist es, daß die Führungsplatte aus Niroster-Material, daß die Zwischenplatte aus verzinktem Stahlblech und daß die Grundplatte aus Aluminium besteht.

Die Erfindung wird nun anhand eines Ausführungsbeispieles unter Zuhilfenahme der angeschlossenen Zeichnung näher beschrieben:

Es zeigen
Fig. 1A eine Schnittdarstellung der erfindungsgemäßen Vorrichtung,
Fig. 1B eine Schnittdarstellung einer modifizierten Vorrichtung nach Fig. 1A,
Fig.2 eine Draufsicht auf einen Einzelträger und
Fig.3 eine Draufsicht auf ein Anordnungsschema der Einzelträger der erfindungsgemäßen Vorrichtung.

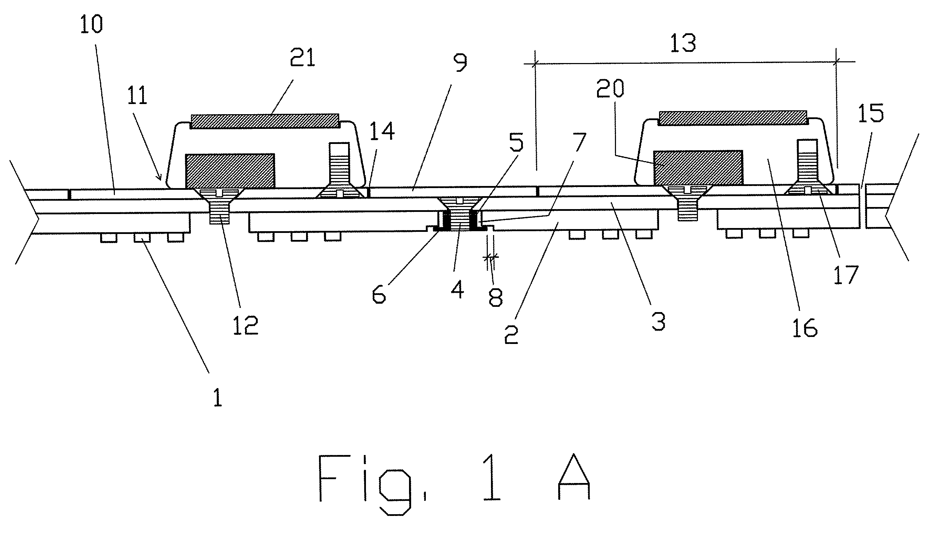

Fig. 1 A zeigt die Vorrichtung zum Positionieren von Werkstücken, bestehend aus der mit einer Riffelung 1 zur Leitung des Vakuums bzw. des Vorheizdruckes versehenen Aluminium - Grundplatte 2. Diese ist mit einer Zwischenplatte 3 aus verzinktem Stahlblech verbunden. Die Verbindung erfolgt über eine Schraube 4 - Hülse 5 Kombination aus Niroster Material. Der Hülsenkopf 6 sitzt in einer Ausnehmung 7 an der Unterseite der Grundplatte 2, welche ihm als Anschlag dient. Um eine Ausdehnung der beiden Platten zueinander zu ermöglichen, ist zwischen dem Außenmaß des Hülsenkopfes 6 und dem Innenmaß der Ausnehmung 7 ein Bewegungsbereich 8 vorgesehen.

Auf der Zwischenplatte 3 sitzt die Führungsplatte 9 auf. Diese besteht aus Niroster Material. Die Zwischenplatte 3 ist mit der Fußplatte 10 des Einzeiträgers 11 über eine Drehbefestigung 12 verbunden. Die Drehbefestigung 12 ist mittels einer Schraubensicherung fixiert.

Die Fußplatte 10 bewegt sich in der Ausnehmung 13 der Führungsplatte 9. Sie kann aus Spritzguß, Kunststoff oder Metall gefertigt sein. Zwischen der Ausnehmung 13 und der Fußplatte 10 ist ein Spaltmaß 14 vorgesehen, um eine Ausdehnung der Materialien aufzufangen, insbesondere auch, weil die obere Platte heißer wird als die untere. Die Ausnehmung 13 ist eine durchgehende Öffnung durch die Führungsplatte 9. Die Fußplatte 10 bewegt sich somit auf der Zwischenplatte 3.

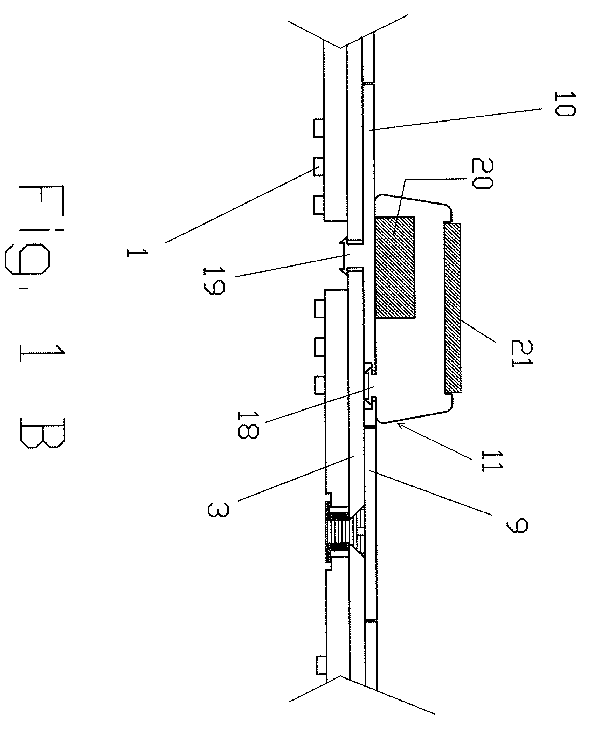

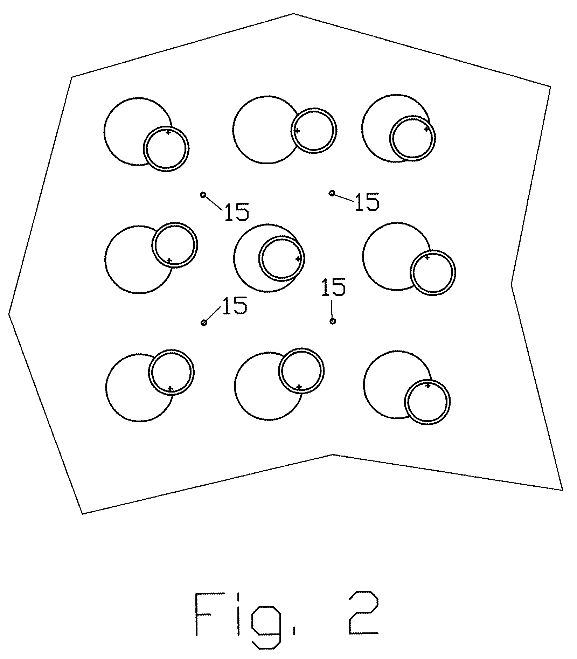

Um das durch die Riffelung geleitete Vakuum oder den Vorheizdruck durch die Platten nach oben zu leiten, sind eine Vielzahl von Öffnungen 15 vorgesehen. Die Anordnung der Öffnungen erfolgt in den freien, von den Einzelträgern 11 nicht überdeckten Bereichen. Sie ist in Fig. 2 dargestellt.

Die drehbare Fußplatte 10 trägt den Kopfteil 16. Der aus Spritzguß, Kunststoff oder Metall bestehende Kopfteil 16 ist über eine als Stift oder Schraube ausgeführte Verbindung 17 mit der Fußplatte 10 drehend verbunden. Wie in Fig. 1 B dargestellt, kann anstelle des Verbindungsstiftes 17 auch eine Clipverbindung 18 verwendet werden. Auch die Drehbefestigung 12 zwischen der Fußplatte 10 und der Zwischenplatte 3 kann als eine Clipverbindung 19 ausgeführt sein.

In den Kopfteil 16 ist ein Permanentmagnet 20 eingeklebt oder mittels Preßsitz eingebracht, Im oberen Bereich umfaßt der Kopfteil 16 einen elastischen Teil 21, der bei Anlegen von Druck den Kopfteil etwas verkürzt.

Die Führungsplatte 9 kann von der Zwischenplatte 3 abgenommen werden, sofern alle Kopfteile 10 ins Innere der Fußplatte 10 gedreht sind. Eine Abnahme erfolgt für Reinigungszwecke, weil durch das Spaltmaß 14 Staub in das System eindringen kann.

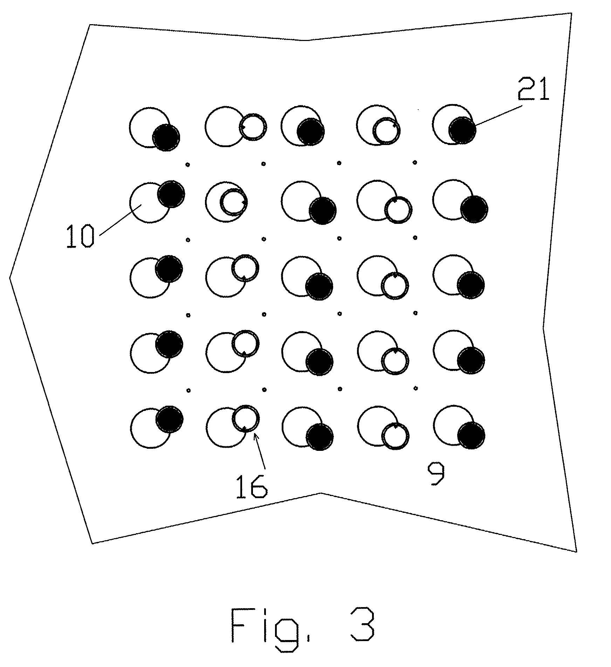

Fig. 3 zeigt eine Draufsicht auf die Vorrichtung, wobei Reihen von Einzelträgern 11 zur besonderen Kennzeichnung unterschiedlich eingefärbt sind.

Durch diese Ausführung kann eine raschere Zuordnung der Kopfteile 10 erfolgen und somit festgelegt werden, wohin sich der Kopfteil 10 bei mehreren zusammenstehenden Kopfteilen bewegen wird.

## Patentansprüche

1. Vorrichtung zum Positionieren von Werkstücken, insbesondere als Auflage in einem Preßtisch, mit einer Führungsplatte und einer Vielzahl bewegbar angeordneter Einzelträger zur Aufnahme der Werkstükke, **dadurch gekennzeichnet, daß** jeder Einzelträger (11) gegeneinander bewegbare Teile, insbesondere einen in der Führungsplatte (9) angeordneten Fußteil (10) und einen mit diesem verbundenen Kopfteil (16) umfaßt, daß der Fußteil (10) in der Führungsplatte (9) drehbar angeordnet ist und daß der Kopfteil (16) dezentral drehbar am Fußteil (10) angeordnet ist.

2. Vorrichtung nach Anspruch 1, **dadurch gekennzeichnet, daß** der Fußteil (10) in einer ihm äquivalenten Ausnehmung (13) der Führungsplatte (9) drehbar angeordnet ist.

3. Vorrichtung nach Anspruch 2, **dadurch gekennzeichnet, daß** der Fußteil (10) kreisförmig ausgebildet ist.

4. Vorrichtung nach Anspruch 3, **dadurch gekennzeichnet, daß** der Fußteil (10) scheibenförmig ausgebildet ist.

5. Vorrichtung nach Anspruch 1, **dadurch gekennzeichnet, daß** die Verbindung (17; 18) zwischen Kopfteil (16) und Fußteil (10) für jeden der beiden Teile (10, 16) dezentral erfolgt.

6. Vorrichtung nach Anspruch 2, **dadurch gekennzeichnet, daß** zwischen dem Außenmaß des Fußteiles (10) und dem Innenmaß der Ausnehmung (13) ein Spaltmaß (14) vorgesehen ist.

7. Vorrichtung nach Anspruch 1, **dadurch gekennzeichnet, daß** der Kopfteil (16) einen Magneten (20) umfaßt.

8. Vorrichtung nach Anspruch 7, **dadurch gekennzeichnet, daß** der Magnet (20) in den Kopfteil (16) an dessen Unterseite und mit dieser bündig abschließend eingesetzt ist.

9. Vorrichtung nach Anspruch 7, **dadurch gekennzeichnet, daß** der Magnet (20) ein Permanentmagnet ist.

10. Vorrichtung nach Anspruch 8, **dadurch gekennzeichnet, daß** der Magnet (20) in den Kopfteil (16) eingeklebt ist.

11. Vorrichtung nach Anspruch 8, **dadurch gekennzeichnet, daß** der Magnet (20) im Kopfteil (16) mittels Preßsitz angeordnet ist.

12. Vorrichtung nach Anspruch 1, **dadurch gekennzeichnet, daß** der Fußteil (10) mit der Führungsplatte (9) über eine Drehbefestigung (12; 19) verbunden ist.

13. Vorrichtung nach Anspruch 12, **dadurch gekennzeichnet, daß** die Drehbefestigung (12; 19) im Fußteil zentral angeordnet ist.

14. Vorrichtung nach Anspruch 1, **dadurch gekennzeichnet, daß** die Führungsplatte (9) auf einer Zwischenplatte (3) aufruht, weiche die Drehbefestigung (12; 19) jedes Fußteiles (10) aufnimmt und daß die Zwischenplatte (3) mit einer Grundplatte (2) verbunden ist.

15. Vorrichtung nach Anspruch 14, **dadurch gekennzeichnet, daß** die Verbindung zwischen Grundplatte (2) und Zwischenplatte (3) eine horizontale Bewegung der beiden Platten (2, 3) zueinander zuläßt.

16. Vorrichtung nach Anspruch 14, **dadurch gekennzeichnet, daß** die Verbindung zwischen Grundplatte (2) und Zwischenplatte (3) über eine Schraube (5) - Hülse (6) Kombination erfolgt.

17. Vorrichtung nach den Ansprüchen 15 und 16, **dadurch gekennzeichnet, daß** an der Unterseite der Grundplatte (2) eine Ausnehmung (7) zur Aufnahme des Hülsenkopfes (6) vorgesehen ist und daß zwischen dem Außenmaß des Hülsenkopfes (6) und dem Innenmaß der Ausnehmung (7) ein Bewegungsbereich (8) vorgesehen ist.

18. Vorrichtung nach Anspruch 14, **dadurch gekennzeichnet, daß** die Grundplatte (2) an ihrer Unterseite mit einer Riffelung (1) versehen ist.

19. Vorrichtung nach Anspruch 14, **dadurch gekennzeichnet, daß** durch die Führungsplatte (9), die Zwischenplatte (3) und die Grundplatte (2) durchgehende Öffnungen (15) zum Durchtritt von Vakuum vorgesehen sind.

20. Vorrichtung nach Anspruch 19, **dadurch gekennzeichnet, daß** die Öffnungen (15) in einem Abstand zwischen 5 - 10 cm vorgesehen sind.

21. Vorrichtung nach einem der vorhergehenden Ansprüche, **dadurch gekennzeichnet, daß** der Kopfteil (16) aus Spritzguß, Kunststoff oder Metall gefertigt ist.

22. Vorrichtung nach Anspruch1, **dadurch gekennzeichnet, daß** der Kopfteil (16) an seiner Oberseite in an sich bekannter Weise eine elastische Auflage (21) umfaßt.

23. Vorrichtung nach einem der vorhergehenden Ansprüche, **dadurch gekennzeichnet, daß** die Führungsplatte (9) aus Niroster-Material besteht.

24. Vorrichtung nach einem der vorhergehenden Ansprüche, **dadurch gekennzeichnet, daß** die Zwischenplatte (3) aus verzinktem Stahlblech besteht.

25. Vorrichtung nach einem der vorhergehenden Ansprüche, **dadurch gekennzeichnet, daß** die Grundplatte (2) aus Aluminium besteht.
